(19) Europäisches Patentamt
European Patent Office
Office européen des brevets

(11) **EP 2 249 195 B1**

## (12) FASCICULE DE BREVET EUROPEEN

(45) Date de publication et mention
de la délivrance du brevet:
**20.06.2012 Bulletin 2012/25**

(21) Numéro de dépôt: **10165002.6**

(22) Date de dépôt: **21.04.2006**

(51) Int Cl.:
**_G02C 7/02_** _(2006.01)_

(54) **Lentille ophtalmique**

Ophthalmische Linse

Ophthalmic lens

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **08.11.2005 FR 0511328**

(43) Date de publication de la demande:
**10.11.2010 Bulletin 2010/45**

(62) Numéro(s) de document de la (des) demande(s) initiale(s) en application de l'article 76 CBE:
**06290651.6 / 1 783 533**

(73) Titulaire: **ESSILOR INTERNATIONAL (Compagnie Générale d'Optique)
94220 Charenton le Pont (FR)**

(72) Inventeurs:
• **Chauveau, Jean-Pierre
94220 Charenton-le-Pont (FR)**
• **Decreton, Bruno
94220 Charenton-le-Pont (FR)**
• **Le Saux, Gilles
94220 Charenton-le-Pont (FR)**

(74) Mandataire: **Cabinet Plasseraud
52, rue de la Victoire
75440 Paris Cedex 09 (FR)**

(56) Documents cités:
**WO-A-03/048841        WO-A1-2004/038488
US-B1- 6 260 967       US-B1- 6 652 096
US-B1- 6 793 340**

• **STEFANIE SCHULDT: "ysis - Natürliches sehen erleben" DEUTSCHE OPTIKER ZEITUNG, XX, DE, no. 5/2004, 1 mai 2004 (2004-05-01), pages 38-43, XP002398937**
• **"Optique ophtalmique - Verres de lunettes semi-finis - Partie 2: Spécification pour les verres progressifs" NORME INTERNATIONALE (ISO), vol. 10322-2, 1996, XP002599906**
• **KNECHT AND MÜLLER: "Gravurenfinder Bestimmungsbuch für Gleitsichtgläser", 1 January 2009 (2009-01-01), GRAVURENFINDER BESTIMMUNGSBUCH FÜR GLEITSICHTGLÄSER,, PAGE(S) 1 - 8, XP007919238,**

Remarques:
Le dossier contient des informations techniques présentées postérieurement au dépôt de la demande et ne figurant pas dans le présent fascicule.

**Description**

La présente invention a pour objet une lentille ophtalmique.

Toute lentille ophtalmique, destinée à être portée dans une monture, est associée à une prescription. La prescription en matière ophtalmique peut comprendre une prescription de puissance, positive ou négative, ainsi qu'une prescription d'astigmatisme. Ces prescriptions correspondent à des corrections à apporter au porteur des lentilles pour corriger les défauts de sa vision. Une lentille est montée dans la monture en fonction de la prescription et de la position des yeux du porteur par rapport à la monture.

Dans les cas les plus simples, la prescription se réduit à une prescription de puissance. La lentille est dite unifocale et présente une symétrie de révolution. Elle est simplement montée dans la monture de sorte que la direction principale du regard du porteur coïncide avec l'axe de symétrie de la lentille.

Pour les porteurs presbytes, la valeur de la correction de puissance est différente en vision de loin et en vision de près, du fait des difficultés d'accommodation en vision de près. La prescription est alors composée d'une valeur de puissance en vision de loin et d'une addition (ou progression de puissance) représentative de l'incrément de puissance entre la vision de loin et la vision de près ; ceci revient à une prescription de puissance en vision de loin et à une prescription de puissance en vision de près. Les lentilles adaptées aux porteurs presbytes sont des lentilles multifocales progressives ; ces lentilles sont décrites par exemples dans FR-A-2 699 294, US-A-5 270 745 ou US-A-5 272 495, FR-A-2 683 642, FR-A-2 699 294 ou encore FR-A-2 704 327. Les lentilles ophtalmiques multifocales progressives comprennent une zone de vision de loin, une zone de vision de près, une zone de vision intermédiaire, une méridienne principale de progression traversant ces trois zones. Elles sont généralement déterminées par optimisation, à partir d'un certain nombre de contraintes imposées aux différentes caractéristiques de la lentille. Ces lentilles sont généralistes, en ce qu'elles sont adaptées aux différents besoins courants du porteur.

On définit des familles de lentilles multifocales progressives, chaque lentille d'une famille étant caractérisée par une addition, qui correspond à la variation de puissance entre la zone de vision de loin et la zone de vision de près. Plus précisément, l'addition, notée A, correspond à la variation de puissance entre un point VL de la zone de vision de loin et un point VP de la zone de vision de près, qui sont appelés respectivement point de contrôle de la vision de loin et point de contrôle de la vision de près, et qui représentent les points d'intersection du regard et de la surface de la lentille pour une vision à l'infini et pour une vision de lecture.

Dans une même famille de lentilles, l'addition varie d'une lentille à l'autre de la famille entre une valeur d'addition minimale et une valeur d'addition maximale.

Habituellement, les valeurs minimale et maximale d'addition sont respectivement de 0.75 dioptrie et 3.5 dioptries, et l'addition varie de 0.25 dioptrie en 0.25 dioptrie d'une lentille à l'autre de la famille.

Des lentilles de même addition diffèrent par la valeur de la sphère moyenne en un point de référence, appelée aussi base. On peut par exemple choisir de mesurer la base au point VL de mesure de la vision de loin. On définit ainsi par le choix d'un couple (addition, base) un ensemble ou jeu de faces avant asphériques pour lentilles multifocales progressives. Habituellement, on peut ainsi définir 5 valeurs de bases et 12 valeurs d'additions, soient soixante faces avant. Dans chacune des bases, on réalise une optimisation pour une puissance donnée. Cette méthode connue permet, à partir de lentilles semi-finies, dont seule la face avant est conformée, de préparer des lentilles adaptées à chaque porteur, par simple usinage d'une face arrière sphérique ou torique.

Ainsi, les lentilles multifocales progressives comportent habituellement une face avant asphérique, qui est la face opposée au porteur des lunettes, et une face arrière sphérique ou torique, dirigée vers le porteur des lunettes. Cette face sphérique ou torique permet d'adapter la lentille à l'amétropie de l'utilisateur, de sorte qu'une lentille multifocale progressive n'est généralement définie que par sa surface asphérique. Comme il est bien connu, une telle surface asphérique est généralement définie par l'altitude de tous ses points. On utilise aussi les paramètres constitués par les courbures minimales et maximales en chaque point, ou plus couramment leur demi-somme et leur différence. Cette demi-somme et cette différence multipliées par un facteur $n-1$, n étant l'indice de réfraction du matériau de la lentille, sont appelées sphère moyenne et cylindre.

Une lentille multifocale progressive peut ainsi être définie, en tout point de sa surface complexe, par des caractéristiques géométriques comprenant une valeur de sphère moyenne et une valeur de cylindre, données par les formules suivantes.

De façon connue en soi, en tout point d'une surface complexe, on définit une sphère moyenne D donnée par la formule:

$$D = \frac{n-1}{2}\left(\frac{1}{R_1} + \frac{1}{R_2}\right)$$

où $R_1$ et $R_2$ sont les rayons de courbure maximal et minimal locaux exprimés en mètres, et n l'indice du matériau constituant la lentille.

On définit aussi un cylindre C, donné par la formule:

$$C = (n - 1) \left| \frac{1}{R_1} - \frac{1}{R_2} \right|$$

Les caractéristiques de la face complexe de la lentille peuvent être exprimées à l'aide de la sphère moyenne et du cylindre.

Par ailleurs, une lentille multifocale progressive peut aussi être définie par des caractéristiques optiques prenant en considération la situation du porteur des lentilles. En effet, les lois de l'optique des tracés de rayons entraînent l'apparition de défauts optiques quand les rayons s'écartent de l'axe central de toute lentille. On s'intéresse classiquement aux aberrations dites défaut de puissance et astigmatisme. Ces aberrations optiques peuvent être appelées de façon générique défauts d'obliité des rayons.

Les défauts d'obliité des rayons ont déjà été bien identifiés dans l'art antérieur et des améliorations ont été proposées. Par exemple, le document WO-A-98 12590 décrit une méthode de détermination par optimisation d'un jeu de lentilles ophtalmiques multifocales progressives. Ce document propose de défmir le jeu de lentilles en considérant les caractéristiques optiques des lentilles et notamment la puissance porteur et l'astigmatisme oblique, dans les conditions du porté. La lentille est optimisée par tracé de rayons, à partir d'un ergorama associant à chaque direction du regard dans les conditions du porté un point objet visé.

On peut en outre considérer les aberrations optiques dites d'ordre élevé comme l'aberration sphérique ou la coma en s'intéressant aux déformations subies par un front d'onde sphérique non aberrant traversant la lentille.

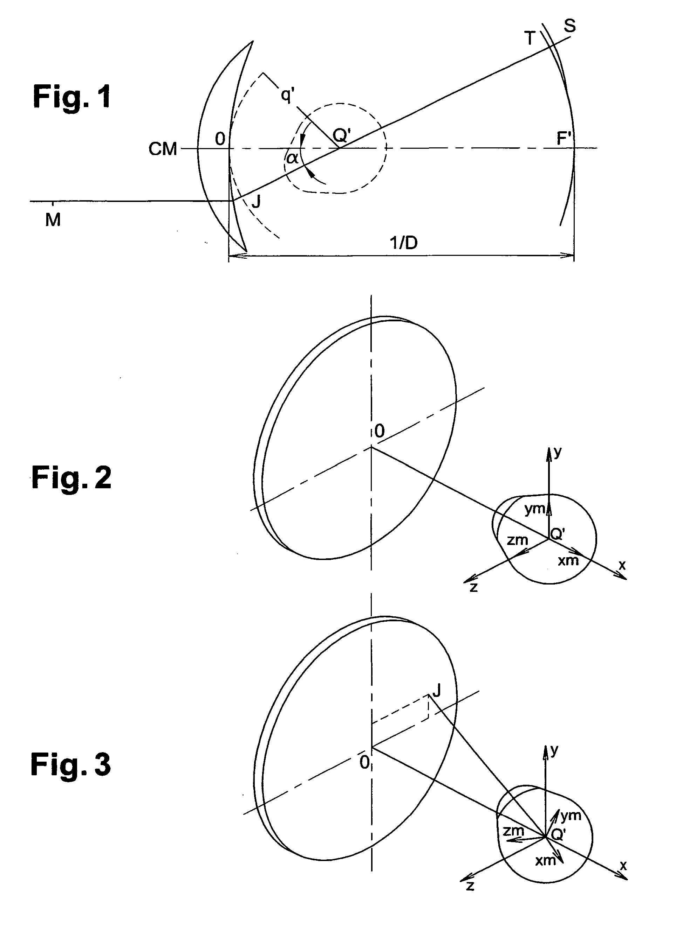

On considère que l'oeil tourne derrière le verre pour balayer l'ensemble de sa surface. Ainsi, en chaque point, on considère un système optique composé de l'oeil et du verre, tel que cela sera expliqué en détails plus bas en référence aux figures 1 à 3. Le système optique est ainsi différent en chaque point de la surface du verre car les positions relatives de l'axe principal de l'oeil et du verre sont effectivement différentes en chaque point du fait de la rotation de l'oeil derrière le verre.

Dans chacune de ces positions successives, on calcule les aberrations subies par le front d'onde traversant le verre et limité par la pupille de l'oeil.

L'aberration sphérique traduit par exemple le fait que les rayons passant au bord de la pupille ne convergent pas dans le même plan que les rayons passant proche de son centre. Par ailleurs, la coma représente le fait que l'image d'un point situé en dehors de l'axe présentera une traînée, due à la variation de puissance du système optique. On peut se référer à l'article de R. G. Dorsch et P. Baumbach, « Coma and Design Characteristics of Progessive Addition Lenses » R G Dorsch, P. Baumbach, Vision Science and Its Applications, Santa Fe, February 1998 qui décrit les effets de la coma sur une lentille multifocale progressive.

Les déformations de ce front d'onde peuvent être décrites globalement par l'écart quadratique moyen, dit RMS pour Root Mean Square en anglais. Le RMS est généralement exprimé en micromètre (μm) et désigne, pour chaque point de la surface complexe, l'écart du front d'onde résultant par rapport à un front d'onde non aberrant. L'invention propose une lentille multifocale progressive définie par ses caractéristiques optiques dans les conditions du porté, garantissant une bonne acuité visuelle des porteurs de verres progressifs, notamment en vision de loin, tout en permettant une bonne accessibilité aux puissances nécessaires en vision de près.

L'invention propose en conséquence une lentille ophtalmique multifocale progressive ayant une prescription d'addition de puissance et présentant une surface complexe ayant :

- une croix de montage ;
- une zone de vision de loin avec un point de contrôle, une zone de vision de près avec un point de contrôle et une zone de vision intermédiaire ;
- une méridienne principale de progression traversant ces trois zones ;

la lentille présentant, dans les conditions courante du porté avec une croix de montage (CM) intersectant la direction primaire du regard, une distance entre le centre de rotation de l'oeil et la face arrière de la lentille de 27 mm, un angle pantoscopique de 8° et une valeur de galbe de 0° et ramenée à une prescription plan en vision de loin par ajustement des rayons de courbure d'au moins une de ses faces :

- un écart quadratique moyen réduit, normalisé à la prescription d'addition, inférieur à 0,025 micromètres par dioptrie sur une zone incluant le point de contrôle en vision de loin et couvrant un secteur dont le sommet est situé sur la méridienne de progression à sensiblement 4° sous la croix de montage avec une ouverture angulaire comprise entre 150° et 160°, l'écart quadratique moyen réduit étant calculé en annulant les coefficients d'ordre 1 et 2 dans la décomposition en polynômes de Zernike d'un front d'onde traversant la lentille ;
- une longueur de progression inférieure ou égale à 25°, la longueur de progression étant définie comme l'angle d'abaissement du regard depuis la croix de montage jusqu'au point de la méridienne pour lequel la puissance optique porteur atteint 85 % de la prescription d'addition.

Selon les modes de réalisation, la lentille selon l'invention présente une ou plusieurs des caractéristiques suivantes :

- la zone d'écart quadratique moyen réduit normalisé inférieur à 0,025 μm/D couvre un secteur d'ouverture angulaire égale à 155° ;

- la zone d'écart quadratique moyen réduit normalisé inférieur à 0,025 μm/D couvre un secteur ayant un axe médian sensiblement confondu avec la méridienne principale de progression dans la zone de vision de loin ;
- la zone d'écart quadratique moyen réduit normalisé inférieur à 0,025 μm/D couvre un secteur de rayon compris entre 35° et 45° ;
- la zone d'écart quadratique moyen réduit normalisé inférieur à 0,025 μm/D couvre un secteur de rayon sensiblement égal à 40° ;

L'invention concerne aussi un équipement visuel comportant au moins une lentille selon l'invention et un procédé de correction de la vision d'un sujet presbyte, comprenant la fourniture au sujet ou le port par le sujet d'un tel équipement.

L'invention concerne en outre un procédé de montage d'une lentille selon l'invention dans un équipement visuel, comprenant :

- la mesure de la position horizontale de la pupille du porteur en vision de loin ;
- la détermination de la hauteur totale du calibre de la monture de l'équipement visuel ;
- le montage dans l'équipement d'une lentille, avec la croix de montage à la position mesurée.

D'autres avantages et caractéristiques de l'invention apparaîtront à la lecture de la description qui suit des modes de réalisation de l'invention, donnés à titre d'exemple et en référence aux dessins qui montrent :

- figure 1, un schéma d'un système optique oeil-lentille, en vue de dessus ;
- figures 2 et 3, des schémas en perspective d'un système oeil-lentille ;
- figure 4, un graphe de puissance optique porteur le long de la méridienne d'une lentille selon l'invention ;
- figure 5, une carte de puissance optique porteur de la lentille selon l'invention ;
- figure 6, une carte d'amplitude d'astigmatisme oblique de la lentille selon l'invention ;
- figure 7, une carte de RMS réduit normalisé de la lentille selon l'invention.

De manière classique, on définit pour une lentille donnée des grandeurs optiques caractéristiques, à savoir une puissance et un astigmatisme, dans les conditions du porté. La figure 1 montre un schéma d'un système optique oeil et lentille en vue de côté, et montre les définitions utilisées dans la suite de la description. On appelle Q' le centre de rotation de l'oeil ; l'axe Q'F' représenté sur la figure en traits mixtes est l'axe horizontal passant par le centre de rotation de l'oeil et s'étendant devant le porteur - autrement dit l'axe Q'F' correspond à la direction primaire du regard. Cet axe coupe, sur la face avant, un point de la lentille appelé Croix de Montage CM, qui est matérialisé sur les lentilles pour permettre leur positionnement par un opticien. La Croix de Montage est généralement situé 4 mm au-dessus du Centre Géométrique de la face avant. Soit le point O, point d'intersection de la face arrière et de cet axe Q'F'. On définit une sphère des sommets, de centre Q', et de rayon q', qui coupe la face arrière de la lentille au point O. A titre d'exemple, une valeur du rayon q' de 27 mm correspond à une valeur courante et fournit des résultats satisfaisants lors du porté des lentilles. On peut dessiner la coupe de la lentille dans le plan (O, x, y) défini en référence à la figure 2. La tangente à cette courbe au point O est inclinée par rapport à l'axe (O, y) d'un angle appelé angle pantoscopique. La valeur de l'angle pantoscopique est couramment de 8°. On peut également dessiner la coupe de la lentille dans le plan (O, x, z). La tangente à cette courbe au point O est inclinée par rapport à l'axe (O, z) d'un angle appelé galbe. La valeur du galbe est couramment de 0°.

Une direction donnée du regard - représentée en traits pleins sur la figure 1 - correspond à une position de l'oeil en rotation autour de Q' et à un point J de la sphère des sommets ; une direction du regard peut aussi être repérée, en coordonnées sphériques, par deux angles α et β. L'angle α est l'angle formé entre l'axe Q'F' et la projection de la droite Q'J sur le plan horizontal contenant l'axe Q'F' ; cet angle apparaît sur le schéma de la figure 1. L'angle β est l'angle formé entre l'axe Q'F' et la projection de la droite Q'J sur le plan vertical contenant l'axe Q'F'. Une direction donnée du regard correspond donc à un point J de la sphère des sommets ou à un couple (α, β).

Dans une direction donnée du regard, l'image d'un point M de l'espace objet situé à une distance objet donnée, se forme entre deux points S et T correspondant à des distances JS et JT minimale et maximale (qui seraient des distances focales sagittales et tangentielles dans le cas de surfaces de révolution, et d'un point M à l'infini). L'angle γ repéré comme l'axe d'astigmatisme, est l'angle formé par l'image correspondant à la distance la plus petite avec l'axe (z$_m$), dans le plan (z$_m$, y$_m$) défini en référence aux figures 2 et 3. L'angle γ est mesuré dans le sens trigonométrique direct lorsque l'on regarde le porteur. Dans l'exemple de la figure 1, sur l'axe Q'F', l'image d'un point de l'espace objet à l'infini se forme au point F' ; les points S et T sont confondus, ce qui revient à dire que la lentille est localement sphérique dans la direction primaire du regard. La distance D est la frontale arrière de la lentille.

Les figures 2 et 3 montrent des schémas en perspective d'un système oeil-lentille. La figure 2 montre la position de l'oeil et du repère lié à l'oeil dans la direction de regard principale, α= β =0, dite direction primaire du regard. Les points J et O sont alors confondus. La figure 3 montre la position de l'oeil et du repère qui y est lié dans une direction (α, β). On a représenté sur les figures 2 et 3 un repère {x, y, z} fixe et un repère {$x_m$, $y_m$, $z_m$} lié à l'oeil, pour bien montrer la rotation de l'oeil. Le repère {x, y, z} a pour origine le point Q' ; l'axe x est l'axe Q'F' - le point F' n'étant pas représenté sur les figures 2 et 3 et passe par le point O ; cet axe est orienté de la lentille vers l'oeil, en correspondance avec le sens de mesure de l'axe d'astigmatisme. Le plan {y, z} est le plan vertical ; l'axe y est vertical et orienté vers le haut ; l'axe z est horizontal, le repère étant orthonormé direct. Le repère {$x_m$, $y_m$, $z_m$} lié à l'oeil a comme centre le point Q' ; l'axe $x_m$ est donné par la direction JQ' du regard, et coïncide avec le repère {x, y, z} pour la direction primaire du regard. La loi de Listing donne les relations entre les repères {x, y, z} et {$x_m$, $y_m$, $z_m$} pour chaque direction du regard, voir Legrand, Optique Physiologique, tome 1, Edition de la Revue d'Optique, Paris 1965.

A l'aide de ces éléments, on peut définir une puissance optique porteur et un astigmatisme, dans chaque direction du regard. Pour une direction du regard ($\alpha$, $\beta$), on considère un point M objet à une distance objet donnée par l'ergorama. On détermine les points S et T entre lesquels se forme l'image de l'objet. La proximité image PI est alors donnée par :

$$PI = \frac{1}{2}\left(\frac{1}{JT} + \frac{1}{JS}\right)$$

tandis que la proximité objet PO est donné par :

$$PO = \frac{1}{MJ}$$

La puissance est définie comme la somme des proximités objet et image, soit :

$$P = PO + PI = \frac{1}{MJ} + \frac{1}{2}\left(\frac{1}{JT} + \frac{1}{JS}\right)$$

L'amplitude de l'astigmatisme est donnée par :

$$A = \left|\frac{1}{JT} - \frac{1}{JS}\right|$$

L'angle de l'astigmatisme est l'angle $\gamma$ défini plus haut : il s'agit de l'angle mesuré dans un repère lié à l'oeil, par rapport à la direction $z_m$, avec lequel se forme l'image T, dans le plan ($z_m$, $y_m$). Ces définitions de puissance et d'astigmatisme sont des définitions optiques, dans les conditions du porté et dans un repère lié à l'oeil. Qualitativement, la puissance et l'astigmatisme ainsi définis correspondent aux caractéristiques d'une lentille mince, qui placée à la place de la lentille dans la direction du regard, fournirait localement les mêmes images. On remarque que la définition fournit, dans la direction primaire du regard, la valeur classique de prescription de l'astigmatisme. Une telle prescription est effectuée par l'ophtalmologiste, en vision de loin, sous la forme d'un couple formé d'une valeur d'axe (en degrés) et d'une valeur d'amplitude (en dioptries).

La puissance et l'astigmatisme ainsi définis peuvent être mesurées expérimentalement sur la lentille en utilisant un frontofocomètre ; ils peuvent aussi être calculés par tracé de rayons dans les conditions du porté.

L'invention propose une lentille ophtalmique multifocale progressive présentant les avantages d'une vision de loin élargie, avec en outre une bonne accessibilité en vision de près. La lentille permet d'assurer une bonne acuité visuelle en vision de loin avec un champ dégagé en limitant les aberrations optiques sur un secteur s'étendant en dessous de la croix de montage et couvrant un grand angle dans la zone de vision de loin. La solution proposée assure aussi une bonne accessibilité aux puissances nécessaires en vision de près, permettant au porteur de voir de façon satisfaisante à des distances égales à environ 40 cm sans l'obliger à beaucoup abaisser les yeux, la zone de vision de près étant accessible dès 25° sous la croix de montage. La lentille est ainsi une lentille adaptée à la vision de loin élargie et à la vision de près. La lentille présente une prescription telle que les puissances prescrites au porteur en vision de loin et en vision de près sont atteintes sur la lentille.

La lentille est décrite dans la suite en référence à un mode de réalisation adapté à des porteurs presbytes présentant une prescription de progression de puissance de 2 dioptries.

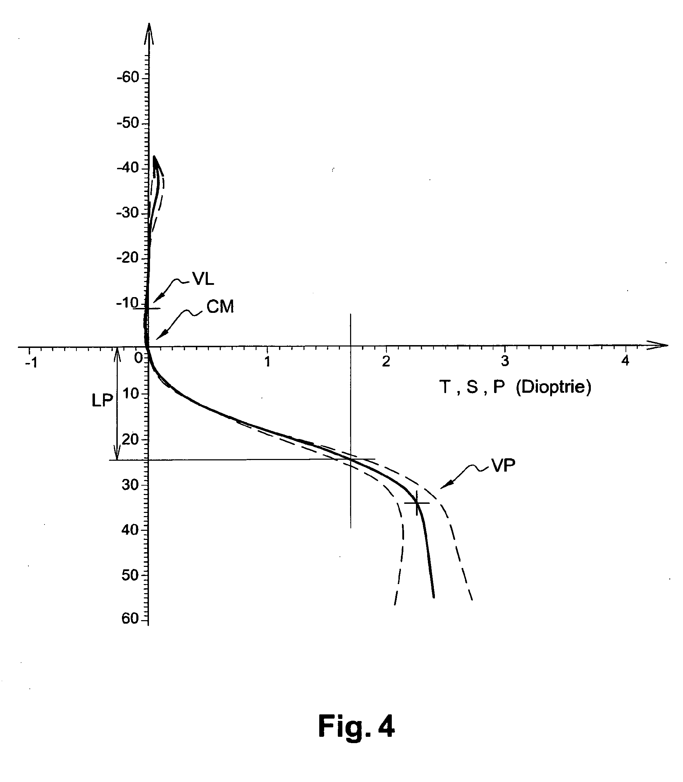

Les figures 4 à 7 montrent une lentille de diamètre 60 mm avec une face avant multifocale progressive et comportant un prisme de 1,15° de base géométrique orienté à 270° dans le repère TABO. Le plan du verre est incliné par rapport à la verticale de 8° et le verre présente une épaisseur de 2 mm. On a considéré une valeur de q' de 27 mm (telle que définie en référence à la figure 1) pour les mesures sur la lentille des figure 4 à 7.

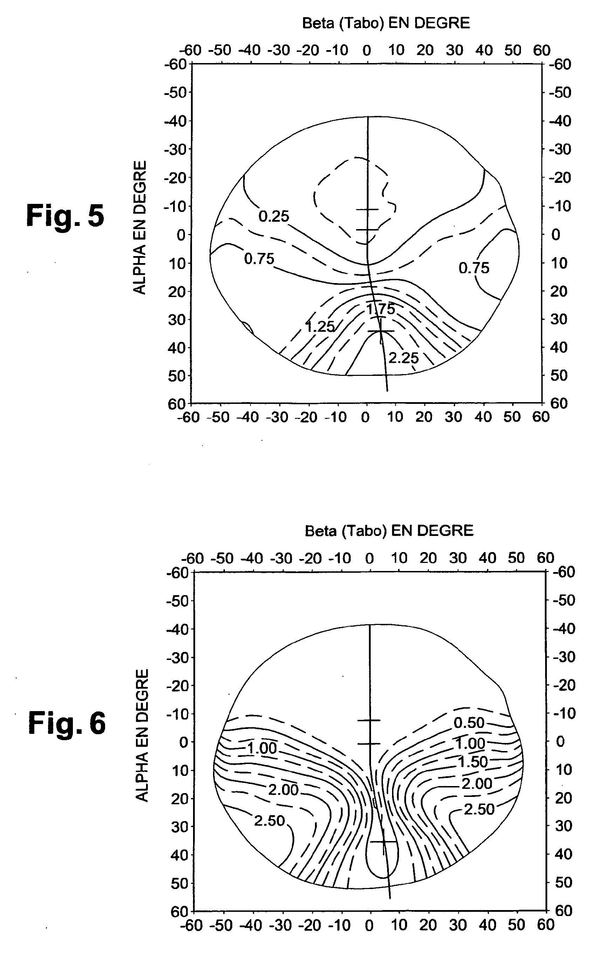

Sur les figures 5 à 7, on a représentée la lentille dans un repère en coordonnées sphériques, l'angle bêta étant porté en abscisse et l'angle alpha en ordonnée.

La lentille présente une ligne sensiblement ombilique, dite méridienne, sur laquelle l'astigmatisme est quasiment nul. La méridienne est confondue avec l'axe vertical en partie supérieure de la lentille et présente une inclinaison du côté nasal dans la partie inférieure de la lentille, la convergence étant plus marquée en vision de près.

Les figures montrent la méridienne ainsi que des repères sur la lentille. La croix de montage CM de la lentille peut être repérée géométriquement sur la lentille par une croix ou toute autre marque telle qu'un point entouré d'un cercle tracé sur la lentille, ou par tout autre moyen approprié ; il s'agit d'un point de centrage matérialisé sur la lentille qui est utilisé par l'opticien pour le montage de la lentille dans la monture. En coordonnées sphériques, la croix de montage CM présente les coordonnées (0, 0) puisqu'elle correspond au point d'intersection de la face avant de la lentille avec la direction primaire du regard, comme définie précédemment. Le point de contrôle en vision de loin VL est situé sur la méridienne et correspond à une élévation de regard de 8° au dessus de la croix de montage ; le point de contrôle en vision de loin VL présente les coordonnées (0, -8°) dans le repère sphérique prédéfini. Le point de contrôle en vision de près VP est situé sur la méridienne et correspond à un abaissement du regard de 35° en dessous de la croix de montage ; le point de contrôle en vision de près VP présente les coordonnées (6°, 35°) dans le repère sphérique prédéfini.

La figure 4 montre un graphe de la puissance optique porteur le long de la méridienne ; on a porté en ordonnées l'angle β et en abscisses la puissance en dioptries. On a reporté en pointillés les puissances optiques minimale et maximale correspondant respectivement aux quantités 1/JT et 1/JS définies précédemment, et en trait plein la puissance optique P telle que définie précédemment.

On peut noter sur la figure une puissance optique porteur sensiblement constante autour du point de contrôle en vision de loin VL, une puissance optique porteur sensiblement constante autour du point de contrôle en vision de près VP et une progression régulière de la puissance le long de la méridienne. Les valeurs sont décalées à zéro à l'origine, où la puissance optique vaut en réalité -0,03 dioptrie correspondant à une lentille plan en vision de loin prescrite pour des porteurs emmétropes presbytes.

La zone de vision intermédiaire commence généralement, pour une lentille multifocale progressive, au niveau de la croix de montage CM ; c'est là que commence la progression de puissance. Ainsi, la puissance optique augmente, depuis la croix de montage jusqu'au point de contrôle en vision de près VP, pour des valeurs de l'angle β de 0 à 35°. Pour les valeurs d'angle au-delà de 35°, la puissance optique redevient sensiblement constante, avec une valeur de 2,23 dioptries. On remarquera que la progression de puissance optique porteur (2,26 dioptries) est supérieure à l'addition de puissance A prescrite (2 dioptries). Cette différence de valeur de puissance est due aux effets obliques.

On peut définir sur une lentille une longueur de progression, désignée LP sur la figure 4, qui est la distance angulaire - ou la différence d'ordonnées - entre le centre optique de la lentille - ou la croix de montage CM - et un point de la méridienne sur lequel la progression de puissance atteint 85 % de l'addition de puissance prescrite A. Dans l'exemple de la figure 4, une puissance optique de 0,85 x 2 dioptries, c'est-à-dire de 1,7 dioptries est atteinte pour un point de coordonnées angulaire β = 24,5° environ.

La lentille selon l'invention présente ainsi une accessibilité aux puissances nécessaires à la vision de près avec un abaissement modéré du regard, inférieure ou égale à 25°. Cette accessibilité garantit une utilisation confortable de la zone de vision de près.

La figure 5 montre les lignes de niveau de la puissance optique porteur définie en une direction du regard et pour un point objet. Comme cela est habituel, on a porté à la figure 5, dans un repère en coordonnées sphériques, les lignes d'isopuissance ; ces lignes sont formées des points présentant une même valeur de la puissance optique P. On a représenté les lignes d'isopuissance de 0 dioptrie à 2,25 dioptries.

On constate sur la figure 5, une zone de vision de loin sans variation de puissance, s'étendant sous la croix de montage. La valeur de la puissance optique porteur est donc sensiblement constante autour de la croix de montage CM. Cette variation de puissance quasi nulle autour de la croix de montage permet une certaine tolérance de positionnement lors du montage de la lentille dans l'équipement visuel, comme cela sera expliqué plus loin.

La figure 6 montre les lignes de niveau de l'amplitude de l'astigmatisme oblique au porté. Comme cela est habituel, on a porté à la figure 6, dans un repère en coordonnées sphériques, les lignes d'isoastigmatisme ; ces lignes sont formées des points présentant une même valeur de l'amplitude d'astigmatisme telle que définie précédemment. On a représenté les lignes d'isoastigmatisme de 0,25 dioptrie à 2,50 dioptries.

On constate que la zone de vision de loin est relativement dégagée : les lignes d'isoastigmatisme supérieures à 0,25 dioptrie s'ouvrent largement pour libérer le champ de vision de loin. On constate aussi que les lignes d'isoastigmatisme s'élargissent, dans la partie inférieure de la lentille, à la hauteur du point de référence pour la vision de près VP. Dans la partie inférieure de la lentille, les lignes d'isoastigmatisme 0,75 et 1 dioptrie sont quasiment parallèles et verticales et délimitent une zone contenant le point de référence en vision de près VP.

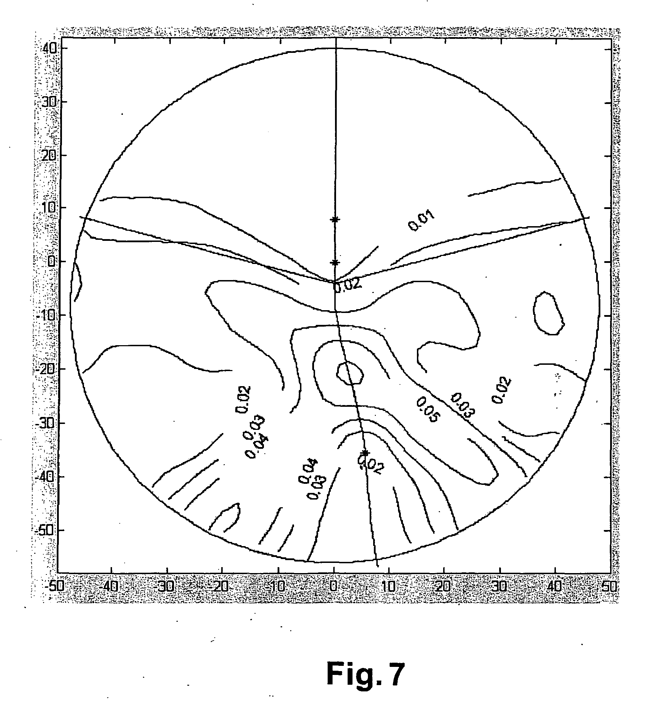

La figure 7 montre les lignes de niveau du RMS réduit et normalisé à la prescription d'addition calculé dans les conditions du porté. Le RMS est calculé pour chaque direction de regard, donc chaque point du verre de la lentille avec une méthode de tracé de rayons. On a considéré un diamètre de pupille du porteur sensiblement égale à 5 mm. Le RMS représente, pour chaque point de la lentille correspondant à une direction de regard, l'écart entre le front d'onde résultant et un front d'onde de référence sphérique non aberrant correspondant à la meilleure sphère passant par ce front d'onde résultant. Les valeurs de RMS ont été calculées pour la lentille des figures 4 à 6, c'est-à-dire pour une lentille plan en vision de loin présentant une prescription d'addition de puissance de 2 dioptries, prescrite pour des porteurs emmétropes presbytes.

Un montage possible pour mesurer les aberrations d'un front d'onde traversant la lentille telles que perçues par l'oeil du porteur est décrit dans l'article de Eloy A. Villegas et Pablo Artal, « Spatially Resolved Wavefront Aberrations of Ophtalmic Progressive-Power Lenses in Normal Wiewing Conditions », Optometry and Vision Science, Vol. 80, No. 2, Février 2003.

De manière connue, un front d'onde ayant traversé une surface asphérique peut être décomposé par des polynômes de Zernike. Plus précisément, une surface d'onde peut être approximée par une combinaison linéaire de polynômes du type :

$$z(x_m, y_m, z_m) = \sum_i a_i p_i(x_m, y_m, z_m)$$

où les Pi sont les polynômes de Zernike, et les ai des coefficients réels.

La décomposition du front d'onde en polynômes de Zernike et le calcul des aberrations du front d'onde ont été standardisés par la société américaine d'optique (Optical Society of America) ; le standard étant disponible sur le site de l'Université de Harvard ftp://color.eri.barvard.edu/ standardization/ Standards TOPS4.pdf.

Le RMS est ainsi calculé, dans les conditions du porté. Le RMS est ensuite réduit, c'est-à-dire que les coefficients d'ordre 1 et 2 dans la décomposition du front d'onde en polynômes de Zernike sont annulés. Les aberrations optiques de défaut de puissance et d'astigmatisme, ne sont donc pas incluses dans le calcul de RMS réduit. Le RMS est ensuite normalisé, c'est-à-dire divisé par l'addition de puissance prescrite.

Sur la figure 7, le RMS réduit normalisé est représenté, exprimé en micromètres par dioptrie. On a représenté les lignes d'iso RMS de 0,01 μm/D à 0,05 μm/D. On a tracé sur la figure 7 un secteur dont le sommet est situé sur la méridienne principale de progression à 4° sous la croix de montage CM et avec une ouverture angulaire de 155°. Selon les critères d'optimisation optique utilisés, l'ouverture angulaire de ce secteur peut être comprise entre 150° et 160°. Dans la zone de la lentille couverte par ce secteur, qui inclut le point de contrôle en vision de loin VL, le RMS réduit normalisé est limité à 0,025 μm/D. Cette zone présentant un RMS réduit normalisé de faible valeur assure une perception visuelle optimale au porteur en vision de loin.

Pour des raisons de symétrie des verres, le secteur ainsi défini peut présenter un axe médian sensiblement confondu avec la méridienne principale de progression dans la zone de vision de loin.

Sur la figure 7, le secteur présentant un RMS réduit normalisé limité à 0,025 μm/D a un rayon de 40° ; mais selon les critères d'optimisation optique utilisés, ce rayon peut être compris entre 35° et 45°.

La lentille selon l'invention présente donc une zone en vision de loin bien dégagée avec des aberrations optiques limitées.

La lentille selon l'invention se prescrit en considérant les prescriptions porteur en vision de loin et en vision de près ce qui détermine l'addition nécessaire. Lorsque la surface complexe est sur la face avant de la lentille, la puissance nécessaire peut être obtenue, comme dans l'état de la technique, par usinage de la face arrière pour assurer que la puissance est identique à la puissance prescrite.

Le montage de la lentille dans un équipement visuel peut se faire de la manière suivante. La position horizontale de la pupille du porteur en vision de loin est mesurée, soit le demi-écart pupillaire uniquement, et la hauteur totale du calibre de la monture de l'équipement visuel est déterminée. La lentille est alors montée dans l'équipement visuel avec la croix de montage positionnée à la position mesurée.

On peut se référer sur ce point à la demande de brevet FR-A-2 807 169 décrivant un procédé de montage simplifié de lentilles ophtalmiques dans une monture. Ce document décrit en particulier les différentes mesures prises par les opticiens et propose de ne mesurer que le demi-écart pupillaire pour effectuer le montage des verres dans la monture en utilisant la hauteur totale du calibre de la monture.

Le montage de la lentille ne nécessite donc qu'une mesure classique du demi-écart pupillaire de vision de loin, ainsi qu'une mesure de la hauteur du calibre de la monture, pour déterminer la hauteur à laquelle doit être placé la croix de montage dans la monture. On détoure en suite la lentille et on la monte dans la monture, de sorte que la croix de montage se trouve à une position déterminée. La détermination de la position verticale de la croix de montage peut bien entendu se faire classiquement par la prise de mesure de la hauteur de montage en mesurant la position dans la monture du regard du sujet en vision de loin ; cette mesure s'effectue de façon classique, le sujet portant la monture et regardant à l'infini.

La lentille selon l'invention permet une tolérance améliorée au montage décrit ci-dessus. Cette tolérance est apportée par une limitation des aberrations optiques autour de la croix de montage. En particulier, les valeurs de puissance porteur et d'astigmatisme oblique sont sensiblement constantes autour de la croix de montage. En outre, la valeur de RMS réduit normalisé est limitée autour de la croix de montage.

La lentille décrite plus haut peut être obtenue par optimisation d'une surface suivant les méthodes d'optimisations connues en soi et décrites dans les documents de l'état de la technique cités plus haut relatifs aux lentilles multifocales progressives. En particulier, un logiciel d'optimisation est utilisé pour calculer les caractéristiques optiques du système oeil-lentille avec une fonction de mérite prédéterminée. On peut utiliser pour l'optimisation un ou plusieurs des critères exposés dans la description qui précède en référence aux figures 4 à 7, et notamment :

- un écart quadratique moyen (RMS) réduit normalisé inférieur à 0,025 μm/D sur une zone incluant le point de contrôle en vision de loin VL et couvrant un secteur dont le sommet est situé sur la méridienne de progression à sensiblement 4° sous la croix de montage avec une ouverture angulaire comprise entre 150° et 160° ; et

- une longueur de progression inférieure ou égale à 25°, la longueur de progression étant définie comme l'angle d'abaissement du regard depuis la croix de montage jusqu'au point de la méridienne pour lequel la puissance optique porteur atteint 85 % de la prescription d'addition.

Ces critères peuvent être combinés à d'autres et notamment à un rayon du secteur de la zone d'écart quadratique moyen réduit normalisé inférieur à 0,025 $\mu$m/D compris entre 35° et 45°.

Le choix de ces critères permet d'obtenir, par optimisation, une lentille. L'homme du métier comprend aisément que la lentille en cause ne présente pas nécessairement des valeurs correspondant exactement aux critères imposés ; par exemple, il n'est pas indispensable que la valeur supérieure du RMS réduit normalisé soit atteinte ou que le sommet du secteur de RMS réduit normalisé limité soit exactement situé à 4° sous la croix de montage.

Dans les exemples d'optimisation ci-dessus, on a proposé d'optimiser une seule des faces des lentilles. Il est clair que dans tous ces exemples, on peut échanger facilement le rôle des surfaces avant et arrière du moment que des cibles optiques similaires à celles de la lentille décrite sont atteintes.

**Revendications**

1. Lentille ophtalmique multifocale progressive ayant une prescription d'addition de puissance (A) et présentant une surface complexe ayant :

   - une croix de montage (CM) ;
   - une zone de vision de loin avec un point de contrôle (VL), une zone de vision de près avec un point de contrôle (VP) et une zone de vision intermédiaire ;
   - une méridienne principale de progression traversant ces trois zones ; la lentille présentant, dans des conditions courantes du porté avec la croix de montage (CM) intersectant la direction primaire du regard, une distance (q') entre le centre de rotation de l'oeil et la face arrière de la lentille de 27 mm, un angle pantoscopique de 8° et une valeur de galbe de 0°, et ramenée à une prescription plan en vision de loin par ajustement des rayons de courbure d'au moins une de ses faces :
   - un écart quadratique moyen (RMS) entre un front d'onde résultant ayant traversé la lentille et un front d'onde de référence sphérique non aberrant correspondant à la meilleure sphère passant par ce front d'onde résultant, réduit, et normalisé à la prescription d'addition (A), inférieur à 0,025 micromètres par dioptrie sur une zone incluant le point de contrôle en vision de loin (VL) et couvrant un secteur dont le sommet est situé sur la méridienne de progression à sensiblement 4° sous la croix de montage (CM) avec une ouverture angulaire comprise entre 150° et 160° et de rayon compris entre 35° et 45°, l'écart quadratique moyen réduit étant calculé en annulant les coefficients d'ordre 1 et 2 dans la décomposition en polynômes de Zernike d'un front d'onde traversant la lentille pour un diamètre de pupille de 5 mm ;
   - une longueur de progression (LP) inférieure ou égale à 25°, la longueur de progression étant définie comme l'angle d'abaissement du regard depuis la croix de montage (CM) jusqu'au point de la méridienne pour lequel la puissance optique porteur atteint 85 % de la prescription d'addition (A).

2. La lentille de la revendication 1, **caractérisée en ce que** la zone d'écart quadratique moyen réduit normalisé inférieur à 0,025 $\mu$m/D couvre un secteur d'ouverture angulaire égale à 155°.

3. La lentille de la revendication 1 ou 2, **caractérisée en ce que** la zone d'écart quadratique moyen réduit normalisé inférieur à 0,025 $\mu$m/D couvre un secteur ayant un axe médian sensiblement confondu avec la méridienne principale de progression dans la zone de vision de loin.

4. La lentille de l'une des revendications 1 à 3, **caractérisée en ce que** la zone d'écart quadratique moyen réduit normalisé inférieur à 0,025 $\mu$m/D couvre un secteur de rayon sensiblement égal à 40°.

5. Un équipement visuel comportant au moins une lentille selon l'une des revendications précédentes.

**Claims**

1. Progressive multifocal ophthalmic lens having a power addition prescription (A) and having a complex surface, having:

   - a fitting cross (CM);
   - a far-vision area having a control point (VL), a near-vision area having a control point (VP) and an intermediate-vision area;
   - a main progression meridian passing through these three areas; the lens having, under usual wearing conditions with the fitting cross (CM) intersecting the primary viewing direction, a distance (q') between the centre of rotation of the eye and the rear face of the lens of 27 mm, a pantoscopic angle of 8° and a curvature value of 0°, and brought to a planar prescription for far vision by adjusting the radii of curvature of at least one of its faces:

- a root mean square (RMS) deviation between a resulting wave front having passed through the lens and a non-aberrant, spherical reference wave front corresponding to the best sphere passing through this reduced, resulting wave front normalised to the addition prescription (A), less than 0.025 micrometres per dioptre, in an area including the far-vision control point (VL) and covering a sector whose apex is located on the progression meridian substantially 4° below the fitting cross (CM) with an angular opening between 150° and 160° and with a radius between 35° and 45°, the reduced root mean square deviation being calculated by cancelling the coefficients of order 1 and 2 in the Zernike polynomial decomposition of a wave front passing through the lens for a pupil diameter of 5 mm;
- a progression length (LP) less than or equal to 25°, the progression length being defined as the angle of lowered viewing from the fitting cross (CM) to the point of the meridian for which the optical power of the wearer reaches 85% of the addition prescription (A).

2. Lens as claimed in Claim 1, **characterised in that** the normalised, reduced root mean square deviation area less than 0.025 $\mu$m/D covers an angular opening sector equal to 155°.

3. Lens as claimed in Claim 1 or 2, **characterised in that** the normalised, reduced root mean square deviation area less than 0.025 $\mu$m/D covers a sector having a median axis substantially coinciding with the main progression meridian in the far-vision area.

4. Lens as claimed in any one of Claims I to 3, **characterised in that** the normalised, reduced root mean square deviation area less than 0.025 $\mu$m/D covers a radius sector substantially equal to 40°.

5. Visual apparatus having at least one lens as claimed in any one of the preceding claims.

**Patentansprüche**

1. Progressive multifokale ophthalmische Linse, die eine Verordnung der Stärke-Addition (A) hat und eine komplexe Oberfläche aufweist, die hat:

- ein Montagekreuz (CM);
- eine Weitsichtzone mit einem Kontrollpunkt (VL), eine Nahsichtzone mit einem Kontrollpunkt (VP) und eine Zwischensichtzone;
- einen Hauptprogressionsmeridian, der diese drei Zonen durchquert;

wobei die Linse unter üblichen Tragebedingungen, mit dem Montagekreuz (CM) die Primärrichtung des Blicks kreuzend, einen Abstand (q') zwischen dem Drehpunkt des Auges und der Rückseite der Linse von 27 mm, einen pantoskopischen Winkel von 8° und einen Rundungswert von 0°, und rückgeführt auf eine Verordnung plan im Weitsichtbereich durch Anpassung der Krümmungsradien mindestens einer ihrer Seiten aufweist:

- eine mittlere quadratische Abweichung (RMS) zwischen einer resultierenden Wellenfront, die die Linse durchquert hat, und einer nicht abweichenden sphärischen Bezugswellenfront entsprechend der besten Sphäre, die durch diese resultierende Wellenfront geht, reduziert und normiert auf die Additions-Verordnung (A), geringer als 0,025 Mikrometer pro Dioptrie über eine Zone, die den Weitsicht-Kontrollpunkt (VL) einschließt und einen Sektor abdeckt, dessen Scheitel sich auf dem Progressionsmeridian bei im Wesentlichen 4° unter dem Montagekreuz mit einer Winkelöffnung zwischen 150° und 160° und mit einem Radius zwischen 35° und 45° befindet, wobei die reduzierte mittlere quadratische Abweichung berechnet wird, indem die Koeffizienten der Ordnung 1 und 2 in der Zerlegung in Zernike-Polynome einer die Linse durchquerenden Wellenfront für einen Pupillendurchmesser von 5 mm annulliert werden;
- eine Progressionslänge (LP) geringer als oder gleich 25°, wobei die Progressionslänge als der Senkungswinkel des Blicks vom Montagekreuz (CM) bis zu dem Punkt des Meridians definiert wird, für den die optische Stärke für den Träger 85 % der Additions-Verschreibung (A) erreicht.

2. Linse nach Anspruch 1, **dadurch gekennzeichnet, dass** die normierte reduzierte mittlere quadratische Abweichungszone geringer als 0,025 $\mu$m/D einen Winkelöffnungssektor gleich 155° abdeckt.

3. Linse nach Anspruch 1 oder 2, **dadurch gekennzeichnet, dass** die normierte reduzierte mittlere quadratische Abweichungszone geringer als 0,025 $\mu$m/D einen Sektor abdeckt, dessen Medianachse im Wesentlichen mit dem Hauptprogressionsmeridian in der Weitsichtzone zusammenfällt.

4. Linse nach einem der Ansprüche 1 bis 3, **dadurch gekennzeichnet, dass** die normierte reduzierte mittlere quadratische Abweichungszone geringer als 0,025 $\mu$m/D einen Radiussektor im Wesentlichen gleich 40° abdeckt.

5. Sehgerät, das mindestens eine Linse nach einem der vorhergehenden Ansprüche aufweist.

**Fig. 1**

**Fig. 2**

**Fig. 3**

**Fig. 4**

Beta (Tabo) EN DEGRE

**Fig. 5**

Beta (Tabo) EN DEGRE

**Fig. 6**

**Fig. 7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2699294 A
- US 5270745 A
- US 5272495 A
- FR 2683642 A
- FR 2704327 A
- WO 9812590 A
- FR 2807169 A

**Littérature non-brevet citée dans la description**

- **R G Dorsch ; P. Baumbach.** Coma and Design Characteristics of Progessive Addition Lenses. *Vision Science and Its Applications, Santa Fe,* Février 1998
- **Legrand.** Optique Physiologique. *la Revue d'Optique,* 1965
- **Eloy A. Villegas ; Pablo Artal.** Spatially Resolved Wavefront Aberrations of Ophtalmic Progressive-Power Lenses in Normal Wiewing Conditions. *Optometry and Vision Science,* Février 2003, vol. 80 (2